# EUROPÄISCHE PATENTSCHRIFT

(11) **EP 2 591 927 B1**
(45) Veröffentlichungstag und Bekanntmachung des Hinweises auf die Patenterteilung: **01.07.2015**
(21) Anmeldenummer: 12192047.4
(22) Anmeldetag: 09.11.2012
(51) Int. Cl.: B60G 3/18, B60G 3/20

(54) **Unabhängige Hinterradaufhängung eines Kraftfahrzeugs**
Independent rear wheel suspension of a vehicle
Suspension indépendante de roue arrière d'un véhicule automobile

(30) Priorität: 11.11.2011 DE 102011086159
(43) Veröffentlichungstag der Anmeldung: 15.05.2013
(73) Patentinhaber: Ford Global Technologies, LLC, Dearborn, MI 48126 (US)
(72) Erfinder: Zandbergen, Paul, 4850 Montzen (BE)
(74) Vertreter: Dörfler, Thomas

(56) Entgegenhaltungen:
- EP-A2- 0 158 279
- EP-A2- 1 288 028
- EP-A2- 1 361 084
- EP-A2- 1 422 081
- EP-A2- 1 738 938
- WO-A2-2007/113761
- DE-A1- 10 344 733
- DE-A1- 19 722 650
- DE-A1-102008 000 982
- DE-A1-102010 017 813
- US-A- 4 772 043
- US-A1- 2006 290 091
- US-A1- 2010 102 527
- US-B2- 7 823 894

## Beschreibung

Die Erfindung betrifft eine unabhängige Hinterradaufhängung eines Kraftfahrzeugs mit einer Radführungseinrichtung, mit einem Radnabenträger und mit einer fahrdynamischen Radsteuerwinkelverstellung, bei welcher der Radnabenträger mittels der Radführungseinrichtung kraftfahrzeugseitig gelagert ist.

Aus DE 10344733 A1 ist eine unabhängige Hinterradaufhängung eines Kraftfahrzeuges bekannt, bei der ein oberer Querlenker und ein unterer Trapezlenker angeordnet ist. Durch die Form des Trapezlenker, speziell die versetzte Anordnung der äußeren Lager, soll die Vorspur vergrößert werden Dabei stützt der obere Querlenker das Federbein, wodurch ein Beeinflussung der Vorspur nur begrenzt erfolgen kann.

US 2010/0102527 A1, WO 2007/113761 A2 (siehe Figur 7), DE 197 22 650 A1 und EP 0 158 279 A2 betreffen Hinterradaufhängungen mit einem einzigen Querlenker, wobei bei den in den erst- beziehungsweise letztgenannten Druckschriften gezeigten Ausführungsformen der Querlenker mit einer Radachse des aufgehängten Rades einen Winkel bilden.

Es ist Aufgabe der Erfindung bei gattungsgemäße Hinterradaufhängungen eine verbesserte fahrdynamische Vorspureinstellung zu erreichen, ein verbessertes dynamischen Ansprechverhalten eines Fahrzeugs, insbesondere beim Bremsen und Beschleunigen zu verbessern.

Die Aufgabe der Erfindung wird von einer unabhängigen Hinterradaufhängung eines Kraftfahrzeugs gemäß Hauptanspruch gelöst.

Durch die erfindungsgemäße Anordnung nach Anspruch 1 des einzigen Radsteuerarms und des Querlenkers wird dieser an der fahrdynamischen Radsteuerwinkelverstellung beteiligt und damit die fahrdynamische Vorspureinstellung verbessert.

Der Begriff "Radführungseinrichtung" beschreibt vorliegend die wesentlichen Hinterradaufhängungsbauteile, mittels welchen einerseits ein Rad der Hinterradaufhängung geführt und andererseits der Radnabenträger an einer Fahrzeugstruktur angelenkt ist.

Der Begriff "Radsteuerarm" beschreibt im Sinne der Erfindung eine Radführungskomponente der Radführungseinrichtung, welche sowohl fahrzeugseitig als auch radnabenträgerseitig jeweils mehr als eine Lagereinrichtung aufweist. Somit gehören die Lagereinrichtungen vorliegend zu dem Radsteuerarm. Vorliegend ist der Radsteuerarm vorzugsweise unterseitig am Radnabenträger montiert.

Insofern ist der einzige untere Radsteuerarm hierbei fahrzeugseitig mittels zwei innerer Radsteuerarmlager an einem Hilfsrahmen einer Kraftfahrzeugkarosserie oder direkt an dieser gelagert. Radnabenträgerseitig ist der einzige untere Radsteuerarm mittels zwei äußerer Radsteuerarmlager an dem Radnabenträger gelagert.

Der Begriff "Querlenker" beschreibt im Sinne der Erfindung hingegen eine weitere Radführungskomponente der Radführungseinrichtung, welche sowohl fahrzeugseitig als auch radnabenträgerseitig jeweils nur eine einzige Lagereinrichtung aufweist. Somit gehören diesbezügliche Lagereinrichtungen vorliegend dem Querlenker an. Vorliegend ist der Querlenker idealerweise oberseitig am Radnabenträger montiert.

Insofern weist der einzige Querlenker hingegen ein inneres Querlenkerlager und ein äußeres Querlenkerlager auf.

Es versteht sich, dass die hier eingesetzten Lager unterschiedlicher Bauart sein können. Vorzugsweise handelt es sich vorliegend um zumindest teilweise elastisch verformbare Elastomerlager bzw. Gummi-Metall-Hülsenlager, wobei die Art der elastischen Verformbarkeit an den jeweiligen Lagern im Sinne des erfüllenden Zwecks gewählt werden kann. Beispielsweise können sich die vorliegenden Lager durch eine Nachgiebigkeit in Längsrichtung, beispielsweise bezogen auf die Fahrzeugkarosserie, und/oder einer Nachgiebigkeit in lateraler Richtung, also seitlich zur Längsrichtung, auszeichnen. Alternativ oder Kumulativ können sie je nach Anforderung in zumindest einer Richtung starr ausgelegt sein, sodass keine Nachgiebigkeit oder nur eine vernachlässigbare Nachgiebigkeit in dieser Richtung vorhanden ist.

Die Begrifflichkeit "fahrdynamische Radsteuerwinkelverstellung" beschreibt im Sinne der Erfindung Bauteile oder Bauteilgruppen der vorliegenden Hinterradaufhängung, mittels welchen insbesondere die Vorspur eines Rades in Abhängigkeit eines Fahrzustandes, beispielsweise einer Kurvenfahrt und/oder eines Bremsvorgangs, in gewissen Grenzen automatisch veränderbar ist.

Die vorliegende fahrdynamische Radsteuerwinkelverstellung kann besonders vorteilhaft wirken, wenn die unabhängige Hinterradaufhängung eine Radsteuerachse mit einem Verlauf durch das äußere Querlenkerlager des einzigen Querlenkers und durch einen Bereich zwischen dem vorderen äußeren Radsteuerarmlager und dem hinteren äußeren Radsteuerarmlager des einzigen unteren Radsteuerarms aufweist.

Ein Untersteuern während einer Kurvenfahrt erfordert ein Einstellen einer Vorspur an dem Rad, auf welchem entsprechende Seitenkräfte einwirken. Die Achse, um welche dieses Rad hierbei steuert, nennt sich Radsteuerachse.

Vorzugsweise schneidet die Radsteuerachse einen Punkt auf einer Verbindungslinie, die zwischen den beiden äußeren Radsteuerlagern verläuft.

Des Weiteren ist es vorteilhaft, wenn die Radsteuerachse näher an dem hinteren äußeren Radsteuerarmlager als an dem vorderen äußeren Radsteuerarmlager vorbeilaufend angeordnet ist.

Insofern liegt der Schnittpunkt der Radsteuerachse und der gedachten Verbindungslinie idealerweise näher an dem hinteren äußeren Radsteuerarmlager.

Dies ist vorteilhafter Weise der Fall, wenn eine hintere Äquivalentsteifigkeit eines hinteren Abschnitts des einzigen unteren Radsteuerarms höher ausgelegt ist als eine vordere Äquivalentsteifigkeit eines vorderen Abschnitts des einzigen unteren Radsteuerarms.

Der Begriff "vorderer Abschnitt" beschreibt im Sinne der Erfindung einen Abschnitt im Bereich der beiden vorderen Radsteuerarmlager des einzigen unteren Radsteuerarms.

Der Begriff "hinterer Abschnitt" beschreibt im Sinne der Erfindung einen entsprechenden Abschnitt in einem Bereich der beiden hinteren Radsteuerarmlager des einzigen unteren Radsteuerarms.

Hierbei resultiert die hintere Äquivalentsteifigkeit hauptsächlich aus einer seitlichen hinteren Radsteuerarmsteifigkeit zwischen den beiden hinteren Radsteuerarmlagern des einzigen unteren Radsteuerarms, einer Steifigkeit eines Befestigungsteils, mittels welchem das hintere innere Radsteuerarmlager fahrzeugseitig befestigt ist, und der lateralen Steifigkeit der beiden hinteren Radsteuerarmlager.

Die vordere Äquivalentsteifigkeit resultiert hauptsächlich aus einer seitlichen vorderen Radsteuerarmsteifigkeit zwischen den beiden vorderen Radsteuerarmlagern des einzigen unteren Radsteuerarms, einer Steifigkeit eines weiteren Befestigungsteils, mittels Welchem das vordere innere Radsteuerarmlager fahrzeugseitig befestigt ist, und der lateralen Steifigkeit der beiden vorderen Radsteuerarmlager.

Eine bevorzugte Ausführungsvariante sieht des Weiteren vor, dass die vorderen Radsteuerarmlager eine Nachgiebigkeit in Längsrichtung und in lateraler Richtung aufweisen und in Bezug hierauf in Vertikalrichtung relativ starr sind.

In diesem Zusammenhang ist es besonders vorteilhaft, wenn die hinteren Radsteuerarmlager eine Nachgiebigkeit in Längsrichtung und in Bezug hierauf in Vertikalrichtung und in lateraler Richtung relativ starr sind.

Hinsichtlich des oberen einzigen Querlenkers sind beide Querlenkerlager, also sowohl das innere als auch das äußere Querlenkerlager, speziell in lateraler Richtung starr.

Deshalb ist es darüber hinaus vorteilhaft, wenn die beiden Querlenkerlager eine Nachgiebigkeit in Längsrichtung aufweisen und in Bezug hierauf in Vertikalrichtung und in lateraler Richtung relativ starr sind.

Durch diese besonderen Lagereigenschaften kann die Steuerfähigkeit des einzigen unteren Radsteuerarms und des einzigen oberen Querlenkers nochmals wesentlich verbessert werden.

Eine besonders bevorzugte Ausführungsvariante sieht weiter vor, dass der einzige Radsteuerarm relativ zu einer Fahrzeugstruktur aufgrund einer Nachgiebigkeit in Längsrichtung der beiden inneren Radsteuerarmlager translatorisch verschieblich und um eine Hochachse im Wesentlichen aufgrund einer Nachgiebigkeit in lateraler Richtung des vorderen inneren Radsteuerarmlagers rotatorisch verschieblich, und dass der Radnabenträger relativ zu dem einzigen Radsteuerarm aufgrund einer Nachgiebigkeit in Längsrichtung der beiden äußeren Radsteuerarmlager translatorisch verschieblich angeordnet sind. Hierdurch kann die fahrdynamische Radsteuerarmwinkelverstellung zumindest radsteuerarmseitig konstruktiv einfacher und besonders betriebssicher realisiert werden.

Eine weitere vorteilhafte Ausführungsvariante sieht zudem vor, dass der einzige Radsteuerarm in Fahrrichtung gesehen nach vorne hin ansteigend angeordnet ist.

Ist beispielsweise das vordere äußere Radsteuerarmlager hoch gestellt, insbesondere höher als das hintere äußere Radsteuerarmlager angeordnet, kann ein sich nach oben bewegendes Rad besonders vorteilhaft eine Vergrößerung der Vorspur bewirken.

Somit ist es vorteilhaft, wenn zumindest eines der beiden vorderen Radsteuerarmlager höher angeordnet ist als eines der beiden hinteren Radsteuerarmlager.

Vorzugsweise sind die beiden vorderen Radsteuerarmlager höher angeordnet als die beiden hinteren Radsteuerarmlager, da hierdurch ein diesbezügliches Ansprechverhalten nochmals verbessert werden kann.

Darüber hinaus ist erfindungsgemäß das äußere Querlenkerlager in Fahrtrichtung gesehen vor dem hinteren äußeren Radsteuerarmlager angeordnet, wobei das hintere äußere Radsteuerarmlager hinter der Radnabe des Radnabenträgers angeordnet ist.

Für besonders gute Steuerungs- und Handhabungscharakteristiken zeichnet sich die unabhängige Hinterradaufhängung darüber hinaus idealerweise durch eine hohe Seitensteifigkeit, eine hohe Sturzsteifigkeit, eine hohe Radnachlaufsteifigkeit sowie eine hohe Rückstellmomentsteifigkeit aus.

Radaufhängungen, wie speziell auch die vorliegende unabhängige Hinterradaufhängung, liefern im Allgemeinen idealerweise einen gewissen Betrag zum Untersteuern während Kurvenfahrten und/oder Bremsvorgängen. Insbesondere bei Kurvenfahrten führen die Radaufhängungen zu einem Untersteuern, um verbesserte Fahreigenschaften zu erzielen. Speziell an Hinterradaufhängungen wird ein solches Untersteuern durch das Einstellen eines gewissen Maßes einer Vorspur zumindest an dem kurvenäußeren Rad erreicht. Zudem bewegt sich das Rad beim Auftreffen auf einer Bodenwelle idealerweise noch oben und nach hinten, um hierdurch eine gute Schlaghärte zu realisieren.

Eine entsprechend nach hinten gerichtete Bewegung kann vorteilhafter Weise durch eine Nachgiebigkeit in Längsrichtung in Kombination mit einer sogenannten Bewegungsreduzierung bewerkstellig werden.

Eine Bewegungs- und Nachgiebigkeitsanalyse unter Zuhilfenahme von Multibody-Dynamic-Software-Package (ADAMS) hat gezeigt, dass all die hier beschrieben und gewünschten Charakteristiken vorteilhafter Weise mit der vorliegenden unabhängigen Hinterradaufhängung erzielt werden können.

Eine hohe Seitensteifigkeit und eine hohe Sturzsteifigkeit werden im Wesentlichen mittels des hinteren Abschnitts des einzigen unteren Radsteuerarms sowie des einzigen oberen Querlenkers erzielt.

Insbesondere die hohe Seitensteifigkeit der beiden hinteren Radsteuerarmlager und der beiden Querlenkerlager ermöglicht somit sowohl die hohe Seitensteifigkeit als auch die hohe Sturzsteifigkeit der unabhängigen Hinterradaufhängung.

Die hohe Radnachlaufsteifigkeit resultiert im Wesentlichen durch den Radsteuerarm und dessen insgesamt vier Radsteuerarmlager mit ihren speziell gewählten Eigenschaften. Insbesondere die Vertikalsteifigkeit der Radsteuerarmlager führt zu der hohen Radnachlaufsteifigkeit.

Darüber hinaus ist der untere einzige Radsteuerarm torsionssteif um eine durch ihn hindurch laufende Achse, welche im Wesentlichen parallel zu der Raddrehachse verläuft, die mit der Radnabenachse zusammenfällt.

Auch eine hohe Rückstellsteifigkeit kann primär mittels des einzigen unteren Radsteuerarms gewährleistet werden.

Ein weiterer Schlüsselparameter für die hohe Rückstellsteifigkeit liegt insbesondere in dem Abstand zwischen der Radnabenachse und dem hinteren äußeren Radsteuerarmlager hinter der Radnabenachse. Je größer der Abstand gewählt ist, desto höher ist die Rückstellsteifigkeit.

Die beiden hinteren Radsteuerarmlager sind in Fahrtrichtung gesehen somit idealerweise hinter der Radnabe des Radnabenträgers angeordnet.

Die Radsteuerachse an der vorliegenden unabhängigen Hinterradaufhängung läuft hierbei vorzugsweise durch das äußere Querlenkerlager des einzigen oberen Querlenkers und einer gedachten Verbindungslinie zwischen den beiden äußeren Radsteuerarmlagern des einzigen unteren Radsteuerarms, wie vorstehend beschrieben.

Der resultierende Winkel zwischen der Radsteuerachse und der diesbezüglichen Vertikalachse nennt sich Radnachlaufwinkel.

Der Radnachlaufwinkel ist negativ, wenn die Radsteuerachse hochwärts nach vorne in Fahrtrichtung geneigt ist.

Der Abstand zwischen einem Spurpunkt, an welchem die Radsteuerachse eine Fahrbahnoberfläche durchdringt, und dem zentrischen Radaufstandspunkt zur Fahrbahnoberfläche nennt man Nachlaufversatz oder Nachlaufspur.

Der Spurpunkt muss in der Regel hinter dem zentrischen Radaufstandspunkt liegen, um eine Vorspurablenkung unter Kurvenlast zu ermöglichen.

Der Radnachlaufwinkel und die Spur verringern sich, wenn das obere äußere Querlenkerlager nach vorne wandert.

Vorzugsweise liegt das obere äußere Querlenkerlager vor dem hinteren äußeren Radsteuerarmlager, und das hintere äußere Radsteuerarmlager liegt hinter der Radnabe, um ein besonders gute Ansprechverhalten erzielen zu können.

Wie vorstehend ebenfalls schon beschrieben ist die laterale Steifigkeit der beiden vorderen Radsteuerarmlager geringer gewählt als die laterale Steifigkeit der beiden hinteren Radsteuerarmlager. Vorteilhafter Weise kann hierdurch im vorderen Abschnitt des einzigen unteren Radsteuerarms eine bessere seitliche Auslenkbarkeit erzielt werden als in seinem hinteren Abschnitt.

Hierdurch kann eine negative Nachlaufspur begünstigt werden, wodurch sich am betroffenen Rad unter Kurvenlast vorteilhafter Weise eine Vorspur einstellen kann, sodass einem unerwünschten Übersteuern weiter entgegengewirkt werden kann.

Eine negativere Nachlaufspur bedingt hierbei eine stärkere Vorspur.

Sobald die Geometrie der unabhängigen Radaufhängung definiert ist, kann die seitliche Steuernachgiebigkeit vorteilhafter Weise mittels der Steifigkeit der einzelnen Radsteuerarmlager des einzigen unteren Radsteuerarms eingestellt werden.

Wird beispielsweise die Steifigkeit der vorderen Radsteuerarmlager reduziert, verringert sich die Rückstellmomentsteifigkeit, wodurch bei Kurvenlast der Betrag der Vorspur entsprechend ansteigt.

Darüber hinaus kann die vorliegende Hinterradaufhängung auch ein Untersteuern infolge eines Radaufhängungswankens generieren. Das sogenannte Eigenlenkverhalten kann mit einer entsprechenden Neigung insbesondere des vorderen Abschnitts des einzigen unteren Radsteuerarms beeinflusst und vorteilhaft abgestimmt werden.

Darüber hinaus ist es vorteilhaft, wenn sowohl der einzige untere Radsteuerarm als auch der einzige obere Querlenker eine in Fahrtrichtung verlaufende Neigungserhöhung aufweisen.

Insofern sieht eine weitere vorteilhafte Ausführungsvariante vor, dass das äußere Querlenkerlager höher angeordnet ist als das innere Querlenkerlager.

Des Weiteren ist es von Vorteil, wenn der einzige untere Radsteuerarm eine von innen nach außen verlaufende Neigungserhöhung aufweist, um eine kinematische Verzögerung bei einem Bewegen in einen Anschlag hinein erzielen zu können. Demzufolge ist es vorteilhaft, wenn die äußeren Radsteuerarmlager höher angeordnet sind als die inneren Radsteuerarmlager.

Vorteilhafter Weise ist der vordere Abschnitt des einzigen unteren Radsteuerarms höher angeordnet als der hintere Abschnitt des einzigen unteren Radsteuerarms, wie vorstehend bereits angedeutet.

Eine derartige Anordnung kann darüber hinaus zumindest bei angetrieben Hinterachsen ein Abheben beim Bremsen und ein Einknicken beim Beschleunigen vorteilhaft verringern.

Die vorliegende erforderliche Nachgiebigkeit in Längsrichtung kann im Wesentlichen mit drei Mechanismen erzielt werden:
Erstens durch eine in oder entgegen der Fahrtrichtung gerichtete Translation des einzigen unteren Radsteuerarms relativ zu der Fahrzeugstruktur aufgrund einer Nachgiebigkeit in Längsrichtung der beiden inneren Radsteuerarmlager.

Zweitens durch eine Rotation des einzigen unteren Radsteuerarms um eine Hochachse im Wesentlichen aufgrund einer Nachgiebigkeit in lateraler Richtung des vorderen inneren Radsteuerarmlagers.

Drittens durch eine in oder entgegen der Fahrtrichtung gerichtete Translation des Radnabenträgers relativ zu dem einzigen unteren Radsteuerarm aufgrund einer Nachgiebigkeit in Längsrichtung der beiden äußeren Radsteuerarmlager.

Aufgrund dieser Nachgiebigkeitsmechanismen kann die vorliegende Hinterradaufhängung vorteilhafter Weise insbesondere auch eine Bremssteuerung gewährleisten.

Konventionelle Viel-Lenker-Hinterradaufhängungen besitzen auch hierfür eine zusätzliche Spurstange. Die vorliegende erfindungsgemäße unabhängige Hinterradaufhängung hingegen benötigt keine solche zusätzliche Spurstange und sie kann dennoch vorteilhaft eine durch einen Bremsvorgang bedingte Vorspur gewährleisten, gerade auch in Kombination mit einer hohen Verfügbarkeit einer Nachgiebigkeit in Längsrichtung zum Realisieren einer guten Schlaghärte.

Dies kann insbesondere auch durch die einzigartige Anordnung und Ausgestaltung des einzigen oberen Querlenkers erzielt werden.

Erfindungsgemäß schließt der einzige obere Querlenker mit der Raddrehachse einen Winkel ein. Während eines Bremsvorgangs verlagert sich der Radnabenträger translatorisch nach hinten gemäß der zuvor beschriebenen ersten und dritten

Mechanismen hinsichtlich der Nachgiebigkeit in Längsrichtung. Der einzige obere Querlenker rotiert hierbei um das innere Querlenkerlager, während das äußere Querlenkerlager weiter nach außen wandert, da das äußere Querlenkerlager vor dem inneren Querlenkerlager liegt. Dies bedingt einen Vorspur-Effekt, da das äußere Querlenkerlager hinter der Radnabe angeordnet ist. Eine Rotation des Radnabenträgers um die Drehachse herum kann vorteilhafter Weise durch die zuvor bereits beschriebene Nachlaufsteifigkeit gut erzielt werden.

Eine Nachaußenbewegung des äußeren Querlenkerlagers während eines Bremsvorgangs bewirkt darüber hinaus vorteilhafter Weise auch eine Reduzierung des statischen Sturzwinkels.

Speziell für ein gutes Kurvenfahrverhalten ermöglicht die vorliegende unabhängige Hinterradaufhängung ein gewisses Maß an einem negativen Sturz, um einen verbesserten Seitenhalt während einer Kurvenfahrt zu erhalten.

Hinsichtlich eines Bremsvorgangs kann eine bestmögliche Haftung bei einem Sturzwinkel mit einem Wert gleich null gewährleistet werden.

Insofern kann mittels einer Sturzreduzierung beim Bremsen der Bremsweg vorteilhaft reduziert werden.

Es versteht sich, dass der vorliegenden unabhängigen Hinterradaufhängung noch Feder- und Dämpferelemente zugehören, welche jedoch zum Beschreiben der vorliegenden Erfindung nicht erwähnt werden müssen.

Weitere Vorteile, Ziele und Eigenschaften vorliegender Erfindung werden anhand anliegender Zeichnung und nachfolgender Beschreibung erläutert, in welchen beispielhaft eine unabhängige Hinterradaufhängung mit lediglich einem einzigen unteren Radsteuerarm und einem einzigen oberen Querlenker zum Realisieren einer fahrdynamischen Radsteuerwinkelverstellung dargestellt und beschrieben ist.

In der Zeichnung zeigen:
- Figur 1: schematisch eine perspektivische Ansicht einer fahrerseitigen Kraftfahrzeughinterradaufhängung eines linken Hinterrades;
- Figur 2: schematisch eine Seitenansicht der Kraftfahrzeughinterradaufhängung aus der Figur 1;
- Figur 3: schematisch eine Aufsicht der Kraftfahrzeughinterradaufhängung aus den Figuren 1 und 2; und
- Figur 4: schematisch eine Vorderansicht der Kraftfahrzeughinterradaufhängung aus den Figuren 1 bis 3.

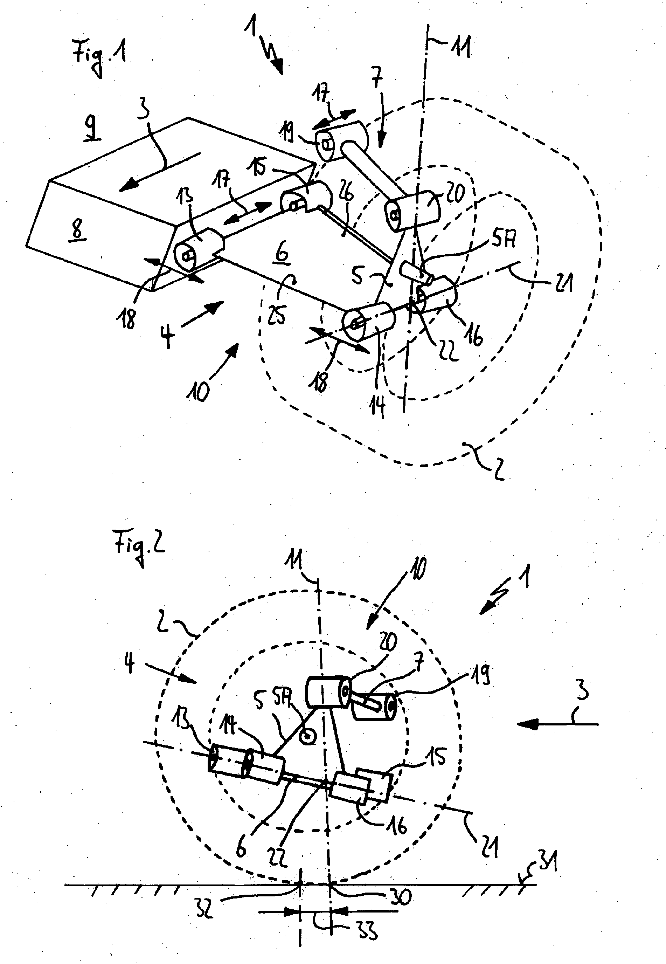

Die in den Figuren 1 bis 4 gezeigte unabhängige linke Kraftfahrzeughinterradaufhängung 1 zum Führen eines Hinterrades 2 in Vorwärtsfahrtrichtung 3 weist im Wesentlichen eine Radführungseinrichtung 4 und einen Radnabenträger 5 einschließlich Radnabe 5A auf. Feder- und Dämpferelemente sind hierbei der Übersichtlichkeit halber nicht dargestellt, jedoch ebenfalls an der unabhängigen Hinterradaufhängung 1 vorgesehen.

Die Radführungseinrichtung 4 besteht im Wesentlichen aus einem einzigen unteren Radsteuerarm 6 und einem einzigen oberen Querlenker 7, wobei der einzige untere Radsteuerarm 6 an einem Hilfsrahmen 8 einer Fahrzeugstruktur 9 und der einzige obere Querlenker 7 an einem hier nicht weiter gezeigten weiteren Karosserieteil der Fahrzeugstruktur 9 gelagert ist.

Vorteilhafter Weise gestalten der einzige untere Radsteuerarm 6 und der einzige obere Querlenker 7 sogleich eine fahrdynamische Radsteuerwinkelverstellung 10 aus, sodass zu deren Realisierung keine weitere Lenkereinrichtung erforderlich ist.

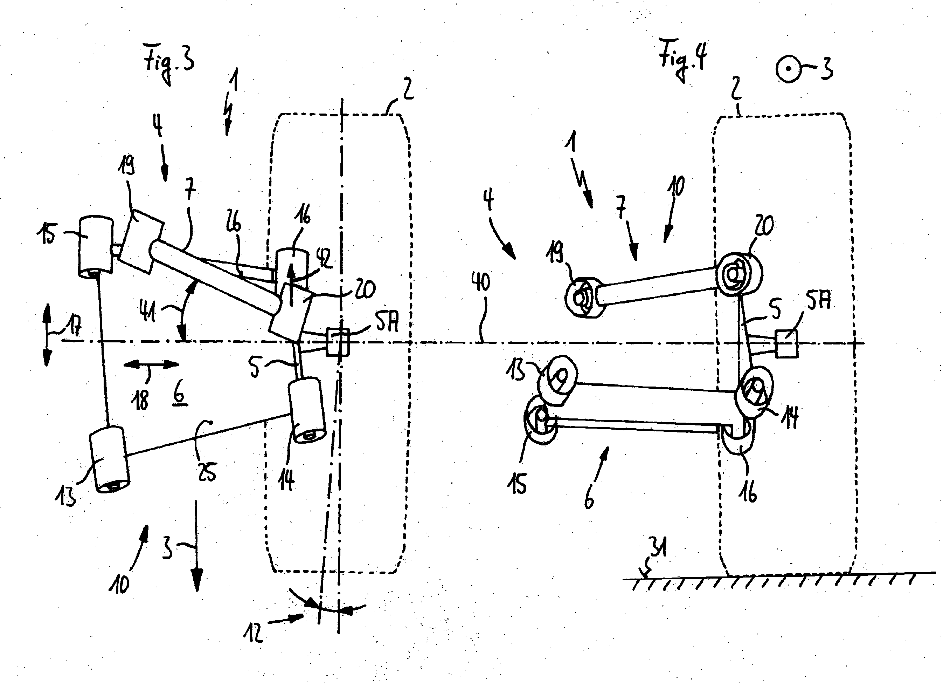

Mittels der fahrdynamischen Radsteuerwinkelverstellung 10 kann insbesondere ein vorteilhaftes Eigenlenkverhalten der unabhängigen Hinterradaufhängung 1 bewirkt werden, indem beispielsweise während einer Kurvenfahrt oder eines Bremsvorgangs eine eigendynamische Verstellung des Radsteuerwinkels um eine Radsteuerachse 11 herum erfolgen und damit eine Vorspur 12 verstärkt werden kann (siehe insbesondere Figur 3).

Damit die fahrdynamische Radsteuerwinkelverstellung 10 mit lediglich dem einzigen unteren Radsteuerarm 6 und dem einzigen oberen Querlenker 7 erfolgen kann, sind spezielle Lagerungs- und Lagebedingungen dieser beiden Radführungskomponenten 6 und 7 zu berücksichtigen.

Somit umfasst der einzige untere Radsteuerarm 6 ein vorderes inneres Radsteuerarmlager 13, ein vorderes äußeres Radsteuerarmlager 14, ein hinteres inneres Radsteuerarmlager 15 und ein hinteres äußeres Radsteuerarmlager 16.

Mittels der beiden inneren Radsteuerarmlager 13 und 15 ist der einzige untere Radsteuerarm 6 an dem Hilfsrahmen 8 gelagert.

Mittels der beiden äußeren Radsteuerarmlager 14 und 16 ist der Radnabenträger 5 an dem Radsteuerarm 6 gelagert.

Das vordere innere Radsteuerarmlager 13 weist eine Nachgiebigkeit in Längsrichtung 17 auf, die im Wesentlichen mit der Vorwärtsfahrtrichtung 3 fluchtet. Darüber hinaus weist es eine Nachgiebigkeit in lateraler Richtung 18 auf, die im Wesentlichen horizontal quer zur Längsrichtung 17 verläuft. In Vertikalrichtung (der Übersichtlichkeit halber nicht eingezeichnet) ist das Radsteuerarmlager 13 hingegen starr, zumindest relativ gegenüber den Nachgiebigkeiten in Längsrichtung 17 und in lateraler Richtung 18.

Das vordere äußere Radsteuerarmlager 14 weist eine Nachgiebigkeit ebenfalls in Längsrichtung 17 auf. Darüber hinaus weist es eine Nachgiebigkeit in lateraler Richtung 18 auf. In Vertikalrichtung ist das vordere äußere Radsteuerarmlager 14 hingegen wieder starr, zumindest relativ gegenüber den Nachgiebigkeiten in Längsrichtung 17 und in lateraler Richtung 18.

Das hintere innere Radsteuerarmlager 15 weist im Wesentlichen nur eine Nachgiebigkeit in Längsrichtung 17 auf. In lateraler Richtung 18 und Vertikalrichtung ist es starrer.

Das hintere äußere Radsteuerarmlager 16 weist identische Eigenschaften hinsichtlich seiner Nachgiebigkeit und Starrheit auf wie das hintere innere Radsteuerarmlager 15.

Insofern kann der einzige untere Radsteuerarm 6 im Wesentlichen im hinteren inneren Radsteuerarmlager 15 um eine Hochachse gedreht werden, da insbesondere das vordere innere Radsteuerarmlager 13 eine Nachgiebigkeit in lateraler Richtung 18 besitzt. Dies ist etwa bei einer Kurvenfahrt entscheidend, da hierdurch baulich besonders einfach ein Vorspureffekt begünstigt werden kann. Etwa beim Bremsen ist der einzige untere Radsteuerarm 6 noch translatorisch verschieblich, da beiden inneren Radsteuerarmlagern 13 und 15 eine Nachgiebigkeit in Längsrichtung 17 innewohnt.

Aufgrund der beschriebenen Lagerbedingungen kann darüber hinaus auch der Radnabenträger 5 im hinteren Radsteuerarmlager 16 gegenüber dem einzigen unteren Radsteuerarm 6 gedreht werden, wodurch der Vorspureffekt nochmals verstärkt werden kann. Hinzu kommt noch eine translatorische Verschieblichkeit des Radnabenträgers 5 gegenüber dem einzigen unteren Radsteuerarm 6 aufgrund der Nachgiebigkeit der beiden äußeren Radsteuerarmlager 14 und 16 in Längsrichtung 17.

Unterseitig ist der Radnabenträger 5 somit vorteilhaft von dem einzigen unteren Radsteuerarm 6 gehalten und geführt.

Um den Radnabenträger 5 auch oberseitig vorteilhaft führen zu können, sodass die unabhängige Hinterradaufhängung 1 erfindungsgemäß arbeiten kann, besitzt der einzige obere Querlenker 7 ein inneres Querlenkerlager 19 und ein äußeres Querlenkerlager 20. Beide verfügen nur über eine Nachgiebigkeit in Längsrichtung 17 (hier nur nochmal exemplarisch eingezeichnet), wodurch insbesondere eine erforderliche Bewegungsfreiheit hinsichtlich des äußeren Querlenkerlagers 20 erzielt werden kann, sodass die fahrdynamische Radwinkelverstellung 10 ordnungsgemäß realisiert werden kann. In lateraler Richtung 18 und Vertikalrichtung sind die beiden Querlenkerlager 19, 20 starrer.

Die Radsteuerachse 11 verläuft in diesem Ausführungsbeispiel vorteilhafter Weise direkt durch das äußere Querlenkerlager 20 und einer gedachten Verbindungslinie 21 zwischen den beiden äußeren Radsteuerarmlagern 14 und 16, wobei die Radsteuerachse 11 die Verbindungslinie 21 in einem Schnittpunkt 22 schneidet.

Dieser Schnittpunkt 22 liegt näher an dem hinteren äußeren Radsteuerarmlager 16 als an dem vorderen äußeren Radsteuerarmlager 14 und damit auch der Verlauf der Radsteuerachse 11.

Dies kann insbesondere dadurch erzielt werden, indem eine vordere Äquivalentsteifigkeit im vorderen Abschnitt 25 des einzigen unteren Radsteuerarms 6 geringer ist als eine hintere Äquivalentsteifigkeit im hinteren Abschnitt 26 des einzigen unteren Radsteuerarms 6. Hierdurch kann sichergestellt werden, dass ein Radsteuerachsendurchtritt 30 durch einen Untergrund 31, auf welchem das Hinterrad 2 abrollt, stets hinter einem zentrischen Kontaktpunkt 32 des Hinterrades 2 liegt, wodurch sich einerseits ein entsprechend vorteithafter Nachlaufversatz 33 einstellt und andererseits eine angestrebte Vorspurablenkung möglich ist.

Idealerweise ist das äußere Querlenkerlager 20 in Vorwärtsfahrtrichtung 3 gesehen hinter der Radnabe 5A des Radnabenträgers 5, aber vor dem äußeren hinteren Radsteuerlager 16 angeordnet.

Des Weiteren befindet sich das äußere Querlenkerlager 20 in Vorwärtsfahrtrichtung 3 gesehen vor dem hinteren äußeren Radsteuerarmlager 16, wobei das hintere äußere Radsteuerarmlager 16 hinter der Radnabe 5A des Radnabenträgers 5 platziert ist.

Zudem ist das äußere Querlenkerlager 20 in Vorwärtsfahrtrichtung gesehen vor dem inneren Querlenkerlager 19 angeordnet ist.

Das äußere Querlenkerlager 20 ist in Vorwärtsfahrtrichtung 3 gesehen im Wesentlichen vor dem hinteren äußeren Radsteuerarmlager 16 und das innere Querlenkerlager 19 ist in Vorwärtsfahrtrichtung 3 gesehen im Wesentlichen hinter dem hinteren äußeren Radsteuerarmlager 16 angeordnet.

Darüber hinaus ist vorteilhafter Weise das äußere Querlenkerlager 20 höher angeordnet als das innere Querlenkerlager 19.

Vorteilhafter Weise ist der einzige untere Radsteuerarm 6 in Vorwärtsfahrtrichtung 3 gesehen nach vorne hin ansteigend in der unabhängigen Hinterradaufhängung 1 positioniert (siehe insbesondere Figur 2), wodurch ein außergewöhnlich guter Vorspureffekt am Hinterrad 2 erzielt werden kann, wenn sich dieses nach oben bewegt.

Somit sind in diesem Ausführungsbeispiel auch die beiden vorderen Radsteuerarmlager 13 und 14 höher in der unabhängigen Hinterradaufhängung 1 angeordnet als die beiden hinteren Radsteuerarmlager 15 und 16.

Wie insbesondere aus der Darstellung nach der Figur 3 hervorgeht, schließt der einzige obere Querlenker 7 mit der Raddrehachse 40 einen Winkel 41 ein. Während eines Bremsvorgangs verlagert sich der Radnabenträger 5 translatorisch in Pfeilrichtung 42 nach hinten gemäß der zuvor beschriebenen ersten und dritten Mechanismen hinsichtlich der Nachgiebigkeit in Längsrichtung 17. Der einzige obere Querlenker 7 rotiert hierbei um das innere Querlenkerlager 19, während das äußere Querlenkerlager 20 weiter nach außen wandert, da das äußere Querlenkerlager 20 vor dem inneren Querlenkerlager 19 liegt. Vorteilhafter Weise kann hierdurch ein Vorspur-Effekt bewirkt werden, da das äußere Querlenkerlager 20 hinter der Radnabe 5A angeordnet ist.

Eine Rotation des Radnabenträgers 5 um die Raddrehachse 40 herum kann vorteilhafter Weise durch die zuvor bereits beschriebene Nachlaufsteifigkeit erzielt werden.

Es versteht sich, dass es sich bei dem vorstehend erläuterten Ausführungsbeispiel lediglich um eine erste Ausgestaltung der erfindungsgemäßen unabhängigen Hinterradaufhängung handelt. Insofern beschränkt sich die Ausgestaltung der Erfindung nicht auf dieses Ausführungsbeispiel.

Sämtliche in den Anmeldungsunterlagen offenbarten Merkmale werden als erfindungswesentlich beansprucht, sofern sie einzein oder in Kombination gegenüber dem Stand der Technik neu sind.

**Bezugszeichenliste**

| | | | |
|---|---|---|---|
| 1 | unabhängige Hinterradaufhängung | 42 | Pfeilrichtung |
| 2 | Hinterrad | | |
| 3 | Vorwärtsfahrtrichtung | | |
| 4 | Radführungseinrichtung | | |
| 5 | Radnabenträger | | |
| 5A | Radnabe | | |
| 6 | einziger unterer Radsteuerarm | | |
| 7 | einziger oberer Querlenker | | |
| 8 | Hilfsrahmen | | |
| 9 | Fahrzeugstruktur | | |
| 10 | Radsteuerwinkelverstellung | | |
| 11 | Radsteuerachse | | |
| 12 | Vorspur | | |
| 13 | vorderes inneres Radsteuerarmlager | | |
| 14 | vorderes äußeres Radsteuerarmlager | | |
| 15 | hinteres inneres Radsteuerarmlager | | |
| 16 | hinteres äußeres Radsteuerarmlager | | |
| 17 | Längsrichtung | | |
| 18 | laterale Richtung | | |
| 19 | inneres Querlenkerlager | | |
| 20 | äußeres Querlenkerlager | | |
| 21 | Verbindungslinie | | |
| 22 | Schnittpunkt | | |
| 25 | vorderer Abschnitt | | |
| 26 | hinterer Abschnitt | | |
| 30 | Radsteuerachsendurchtritt | | |
| 31 | Untergrund | | |
| 32 | Kontaktpunkt | | |
| 33 | Nachlaufversatz | | |
| 40 | Raddrehachse | | |
| 41 | Winkel | | |

## Patentansprüche

1. Unabhängige Hinterradaufhängung (1) eines Kraftfahrzeugs (8, 9) mit einer Radführungseinrichtung (4), mit einem Radnabenträger (5) mit einer Radnabe (5A) und einer Radachse (40) und mit einer fahrdynamischen Radsteuerwinkelverstellung (10), bei welcher der Radnabenträger (5) mittels der Radführungseinrichtung (4) kraftfahrzeugseitig gelagert ist, wobei die Radführungseinrichtung (4) lediglich einen einzigen Radsteuerarm (6) mit einem vorderen inneren Radsteuerarmlager (13), mit einem vorderen äußeren Radsteuerarmlager (14), mit einem hinteren inneren Radsteuerarmlager (15) und mit einem hinteren äußeren Radsteuerarmlager (16) und einen einzigen Querlenker (7) mit einem inneren Querlenkerlager (19) und mit einem äußeren Querlenkerlager (20) aufweist, und die fahrdynamische Radsteuerwinkelverstellung (10) von dem einzigen Radsteuerarm (6) und dem einzigen Querlenker (7) ausgestaltet ist, wobei in der Draufsicht der einzigen Querlenker (7) mit der Radachse (40) einen Winkel (41) bildet, ***dadurch gekennzeichnet, dass*** in der Draufsicht das äußere Querlenkerlager (20) bezogen auf die Fahrrichtung (3) vor dem inneren Querlenkerlager (19) liegt, ***dass*** in der Draufsicht das äußere Querlenkerlager (20) bezogen auf die Fahrrichtung (3) hinter der Radnabe (5A) liegt und ***dass*** das äußere Querlenkerlager (20) in Fahrtrichtung (3) gesehen vor dem hinteren äußeren Radsteuerarmlager (16) angeordnet ist, wobei das hintere äußere Radsteuerarmlager (16) hinter der Radnabe (5A) des Radnabenträgers (5) angeordnet ist.

2. Unabhängige Hinterradaufhängung (1) nach Anspruch 1, ***gekennzeichnet durch*** eine Radsteuerachse (11) mit einem Verlauf **durch** das äußere Querlenkerlager (20) des einzigen Querlenkers (7) und **durch** einen Bereich (22) zwischen dem vorderen äußeren Radsteuerarmlager (14) und dem hinteren äußeren Radsteuerarmlager (16) des einzigen unteren Radsteuerarms (6).

3. Unabhängige Hinterradaufhängung (1) nach einem der Ansprüche 1 oder 2, ***dadurch gekennzeichnet*, dass** die Radsteuerachse (11) näher an dem hinteren äußeren Radsteuerarmlager (16) als an dem vorderen äußeren Radsteuerarmlager (14) vorbeilaufend angeordnet ist.

4. Unabhängige Hinterradaufhängung (1) nach einem nach einem oder mehreren der Ansprüche 1 bis 3, ***dadurch gekennzeichnet*, dass** zumindest eines der beiden vorderen Radsteuerarmlager (13, 14), vorzugsweise beide vorderen Radsteuerarmlager (13, 14), höher angeordnet ist als eines der beiden hinteren Radsteuerarmlager (15, 16), vorzugsweise als beide hinteren Radsteuerarmlager (15, 16).

5. Unabhängige Hinterradaufhängung (1) nach einem oder mehreren der Ansprüche 1 bis 4, ***dadurchgekennzeichnet***, dass der einzige Radsteuerarm (6) relativ zu einer Fahrzeugstruktur aufgrund einer Nachgiebigkeit in Längsrichtung (17) der beiden inneren Radsteuerarmlager (13, 15) translatorisch verschieblich und um eine Hochachse im Wesentlichen aufgrund einer Nachgiebigkeit in lateraler Richtung (18) des vorderen inneren Radsteuerarmlagers (13) rotatorisch verschieblich, und dass der Radnabenträger (5) relativ zu dem einzigen Radsteuerarm (6) aufgrund einer Nachgiebigkeit in Längsrichtung (17) der beiden äußeren Radsteuerarmlager (14, 16) translatorisch verschieblich angeordnet sind.

## Claims

1. Independent rear wheel suspension system (1) of a motor vehicle (8, 9) having a wheel guide device (4), having a wheel hub carrier (5) with a wheel hub (5A) and a wheel axle (40), and having a driving-dynamics wheel control angle adjustment means (10), in which the wheel hub carrier (5) is mounted on the motor vehicle side by means of the wheel guide device (4), the wheel guide device (4) having merely a single wheel control arm (6) with a front inner wheel control arm bearing (13), with a front outer wheel control arm bearing (14), with a rear inner wheel control arm bearing (15) and with a rear outer wheel control arm bearing (16) and a single transverse link (7) with an inner transverse link bearing (19) and with an outer transverse link bearing (20), and the driving-dynamics wheel control angle adjustment means (10) being configured by the single wheel control arm (6) and the single transverse link (7), the single transverse link (7) forming an angle (41) with the wheel axle (40) in plan view, **characterized in that**, in plan view, the outer transverse link bearing (20) lies in front of the inner transverse link bearing (19) in relation to the driving direction (3), **in that**, in plan view, the outer transverse link bearing (20) lies behind the wheel hub (5A) in relation to the driving direction (3), and **in that** the outer transverse link bearing (20) is arranged in front of the rear outer wheel control arm bearing (16) as viewed in the driving direction (3), the rear outer wheel control arm bearing (16) being arranged behind the wheel hub (5A) of the wheel hub carrier (5).

2. Independent rear wheel suspension system (1) according to Claim 1, **characterized by** a wheel control axis (11) with a course through the outer transverse link bearing (20) of the single transverse link (7) and through a region (22) between the front outer wheel control arm bearing (14) and the rear outer wheel control arm bearing (16) of the single lower wheel control arm (6).

3. Independent rear wheel suspension system (1) according to either of Claims 1 and 2, **characterized in that** the wheel control axis (11) is arranged so as to run more closely past the rear outer wheel control arm bearing (16) than past the front outer wheel control arm bearing (14).

4. Independent rear wheel suspension system (1) according to one or more of Claims 1 to 3, **characterized in that** at least one of the two front wheel control arm bearings (13, 14), preferably both front wheel control arm bearings (13, 14), is/are arranged so as to be higher than one of the two rear wheel control arm bearings (15, 16), preferably than both rear wheel control arm bearings (15, 16).

5. Independent rear wheel suspension system (1) according to one or more of Claims 1 to 4, **characterized in that** the single wheel control arm (6) is arranged such that it can be displaced translationally relative to a vehicle structure on account of a compliance in the longitudinal direction (17) of the two inner wheel control arm bearings (13, 15) and such that it can be displaced rotationally about a vertical axis substantially on account of a compliance in the lateral direction (18) of the front inner wheel control arm bearing (13), and **in that** the wheel hub carrier (5) is arranged such that it can be displaced translationally relative to the single wheel control arm (6) on account of a compliance in the longitudinal direction (17) of the two outer wheel control arm bearings (14, 16).

## Revendications

1. Suspension de roue arrière indépendante (1) d'un véhicule automobile (8, 9) comprenant un dispositif de guidage de roue (4), un support de moyeu de roue (5) avec un moyeu de roue (5A) et un essieu de roue (40) et un réglage angulaire de commande de roue dynamique de conduite (10), le support de moyeu de roue (5) étant supporté du côté du véhicule automobile au moyen du dispositif de guidage de roue (4), le dispositif de guidage de roue (4) présentant seulement un bras de commande de roue unique (6) avec un palier de bras de commande de roue intérieur avant (13), avec un palier de bras de commande de roue extérieur avant (14), avec un palier de bras de commande de roue intérieur arrière (15) et avec un palier de bras de commande de roue extérieur arrière (16) et un bras oscillant transversal unique (7) avec un palier de bras oscillant transversal intérieur (19) et un palier de bras oscillant transversal extérieur (20), et le réglage angulaire de commande de roue dynamique de conduite (10) étant configuré par le bras de commande de roue unique (6) et le bras oscillant transversal unique (7), le bras oscillant transversal unique (7) formant, en vue de dessus, avec l'essieu de roue (40), un angle (41), **caractérisée en ce que** le palier de bras oscillant transversal extérieur (20) est situé, en vue de dessus, par rapport à la direction de conduite (3), avant le palier de bras oscillant transversal intérieur (19), **en ce que** le palier de bras oscillant transversal extérieur (20) est situé, en vue de dessus, par rapport à la direction de conduite (3), derrière le moyeu de roue (5A) et **en ce que** le palier de bras oscillant transversal extérieur (20) est disposé, vu dans la direction de conduite (3), avant le palier de bras de commande de roue extérieur arrière (16), le palier de bras de commande de roue extérieur arrière (16) étant disposé derrière le moyeu de roue (5A) du support de moyeu de roue (5).

2. Suspension de roue arrière indépendante (1) selon la revendication 1, **caractérisée par** un essieu de commande de roue (11) s'étendant à travers le palier de bras oscillant transversal extérieur (20) du bras oscillant transversal unique (7) et à travers une région (22) entre le palier de bras de commande de roue extérieur avant (14) et le palier de bras de commande de roue extérieur arrière (16) du bras de commande de roue inférieur unique (6).

3. Suspension de roue arrière indépendante (1) selon l'une quelconque des revendications 1 ou 2, **caractérisée en ce que** l'essieu de commande de roue (11) est disposé de manière à passer plus près devant le palier de bras de commande de roue extérieur arrière (16) que devant le palier de bras de commande de roue extérieur avant (14).

4. Suspension de roue arrière indépendante (1) selon l'une ou plusieurs des revendications 1 à 3, **caractérisée en ce qu'**au moins l'un des deux paliers de bras de commande de roue avant (13, 14), de préférence les deux paliers de bras de commande de roue avant (13, 14), est/sont disposé(s) en position plus élevée que l'un des deux paliers de bras de commande de roue arrière (15, 16), de préférence que les deux paliers de bras de commande de roue arrière (15, 16).

5. Suspension de roue arrière indépendante (1) selon l'une quelconque ou plusieurs des revendications 1 à 4, **caractérisée en ce que** le bras de commande de roue unique (6) est disposé de manière déplaçable en translation par rapport à une structure du véhicule, du fait d'une flexibilité dans la direction longitudinale (17) des deux paliers de bras de commande de roue intérieurs (13, 15), et de manière déplaçable en rotation autour d'un axe vertical essentiellement du fait d'une flexibilité dans la direction latérale (18) du palier de bras de commande de roue intérieur avant (13), et **en ce que** le support de moyeu de roue (5) est disposé, par rapport au bras de commande de roue unique (6), de manière déplaçable en translation du fait d'une flexibilité dans la direction longitudinale (17) des deux paliers de bras de commande de roue extérieurs (14, 16).
